# EUROPEAN PATENT SPECIFICATION

(11) **EP 2 551 551 B1**
(45) Date of publication and mention of the grant of the patent: **20.05.2015**
(21) Application number: 12176641.4
(22) Date of filing: 17.07.2012
(51) Int. Cl.: F16H 57/029, F16H 57/035, F16H 57/02, F16H 9/18

(54) **Power unit for small vehicle**
Antriebseinheit für kleines Fahrzeug
Unité d'entraînement pour petit véhicule

(30) Priority: 23.07.2011 JP 2011161427
(43) Date of publication of application: 30.01.2013
(73) Proprietor: Honda Motor Co., Ltd., Tokyo 107-8556 (JP)
(72) Inventor: Inomoto, Yutaka, Saitama, 351-0193 (JP); Tsuchiya, Ryuji, Saitama, 351-0193 (JP); Morimoto, Yasuhiro, Saitama, 351-0193 (JP)
(74) Representative: Ilgart, Jean-Christophe

(56) References cited:
- EP-A2- 1 138 591
- EP-A2- 1 143 166
- EP-A2- 1 880 934
- EP-A2- 2 546 551
- US-A- 4 475 893
- US-A1- 2007 142 140

## Description

The present invention relates to a power unit for a small vehicle in which a transmission chamber is formed inside a transmission case connected to a crankcase of an engine body and extended to the side of a rear wheel, a belt type continuously variable transmission is stored in the transmission chamber, the belt type continuously variable transmission being arranged between a crankshaft rotatably supported by the crankcase and a transmission shaft interlocked and connected to an axle of the rear wheel and rotatably supported by the transmission case, a first shaft support part through which the crankshaft rotatably penetrates is arranged in the crankcase, a second shaft support part through which the transmission shaft rotatably penetrates is arranged in the transmission case, and seal members of an endless shape and bearing members are interposed in this order from the transmission chamber side between the first shaft support part and the crankshaft and between the second shaft support part and the transmission shaft.

A power unit for a motorcycle is already known from document JP 2009 191969 A in which a transmission chamber is formed inside a transmission case connected to a crankcase, a belt type continuously variable transmission arranged between a crankshaft and a transmission shaft interlocked and connected to an axle of a rear wheel is stored in the transmission chamber, and seal members of an annular shape and bearing members are interposingly furnished respectively in this order from the transmission chamber side between the first shaft support part arranged in the crankcase and the crankshaft and between a second shaft support part arranged in the transmission case and the transmission shaft.

Document EP 1 880 934 A2 discloses a power unit according to the preamble of claim 1.

In the meantime, inside the transmission chamber of the transmission case, the dust such as abrasion powder of a belt and the dust intruded from the outside when external air for cooling is introduced into the transmission chamber floats, the lifetime of seal members is shortened when the dust inside the transmission chamber adheres to the seal members of an annular shape interposed between the first shaft support part of the crankcase and the crankshaft and between the second shaft support part of the transmission case and the transmission shaft, and therefore it is desirable to extend the lifetime of the seal member by suppressing adhesion of the dust to the seal members as much as possible.

The present invention has been developed considering such circumstances and its object is to provide a power unit for a small vehicle capable of contributing to improvement of the lifetime of seal members by suppressing the dust inside a transmission chamber from attaching to the seal members as much as possible.

In order to achieve the object, there is provided a power unit for a small vehicle according to claim 1.

In a preferred embodiment of the present invention the surrounding wall extending from the first shaft support part is formed integrally with the crankcase.

In a further preferred embodiment of the present invention the surrounding wall extending from the first shaft support part of a cylindrical shape is formed in an endless shape continuing over the entire periphery of the first shaft support part with an outer peripheral surface thereof continuing in flush with an outer peripheral surface of the first shaft support part.

Note that oil seals 72, 109 of an embodiment correspond to seal members of the present invention, ball bearings 73, 110 of the embodiment correspond to bearing members of the present invention, a ramp plate 74 of the embodiment corresponds to a first rotation member of the present invention, and a fixed pulley half body 92 and an inner cylinder 124 of the embodiment correspond to a second rotation member of the present invention.

According to the invention, the surrounding wall that is arranged in the first shaft support part of the crankcase and surrounds at least a part of the crankshaft extends from the end on the transmission chamber side of the first shaft support part so that the distal end thereof approaches the first rotation member, therefore the end on the transmission chamber side of the seal member interposed between the first shaft support part and the crankshaft is covered by the first rotation member and the surrounding wall, and thereby the dust inside the transmission chamber can be suppressed as much as possible from attaching to the seal member which can contributes to improvement of the lifetime of the seal member.

Also, according to the preferred embodiment of the present invention, because the surrounding wall is formed integrally with the crankcase, increase of the number of components is suppressed, productivity is improved, and the cost can be reduced.

According to the further preferred embodiment of the present invention, because the outer peripheral surface of the surrounding wall becomes of a continuous endless shape continuing in flush with the outer peripheral surface of the first shaft support part that is of a cylindrical shape over the entire periphery, the surrounding wall covers the end on the transmission chamber side of the seal member interposed between the first shaft support part and the crankshaft more effectively and can suppress the dust directed to the seal member more effectively.

According the present invention, the annular part is arranged in the first rotation member, a part of the annular part is disposed inside the surrounding wall arranged in the first shaft support part, therefore the labyrinth structure is constructed between the outer periphery and the inner periphery of the surrounding wall, and intrusion of the dust to the seal member side can be suppressed more effectively.

According to the present invention, the drive mechanism includes the ramp plate as the first rotation member fixed to the crankshaft, a plurality of slope parts allowing the weight rollers to rolling contact therewith are formed in the ramp plate so that a part thereof protrudes to the first shaft support part side, and the annular part disposed inside the slope part in the radial direction of the crankshaft is arranged in the ramp plate, and therefore the effect of preventing intrusion of the dust into the surrounding wall can be enhanced due to the ventilation effect of an air stream caused by protrusion of a part of a plurality of slope parts to the first shaft support part side during rotation of the ramp plate.

Further, according to the present invention, the guide plate parts guiding slide pieces attached to the outer periphery of the ramp plate are arranged in multiple positions in the peripheral direction on the outer periphery of the movable pulley half body so that a part thereof overlaps with the surrounding wall in the radial direction of the crankshaft at least at a low rotational speed and each guide plate extends in the direction of the axial line of the crankshaft, and therefore the effect of preventing intrusion of the dust into the surrounding wall can be further enhanced due to the centrifugal fan effect of the guide plate parts.

Fig. 1 is a left side view of a motorcycle of a first embodiment.
Fig. 2 is a cross-sectional view taken along line 2-2 of Fig. 1.
Fig. 3 is an enlarged cross-sectional view showing the vicinity of a driving pulley of a belt type continuously variable transmission.
Fig. 4 is a drawing when a ramp plate is viewed from a crankcase side.
Fig. 5 is a cross-sectional view taken along line 5-5 of Fig. 4.
Fig. 6 is an enlarged cross-sectional view showing the vicinity of a driven pulley of the belt type continuously variable transmission and a gear mechanism.
Fig. 7 is a cross-sectional view showing a driven pulley of a second embodiment.

Embodiments of the present invention will be described referring to the attached drawings. Also, in the description below, each direction of front and rear, up and down, and right and left is to express the direction when viewed from an occupant riding the motorcycle.

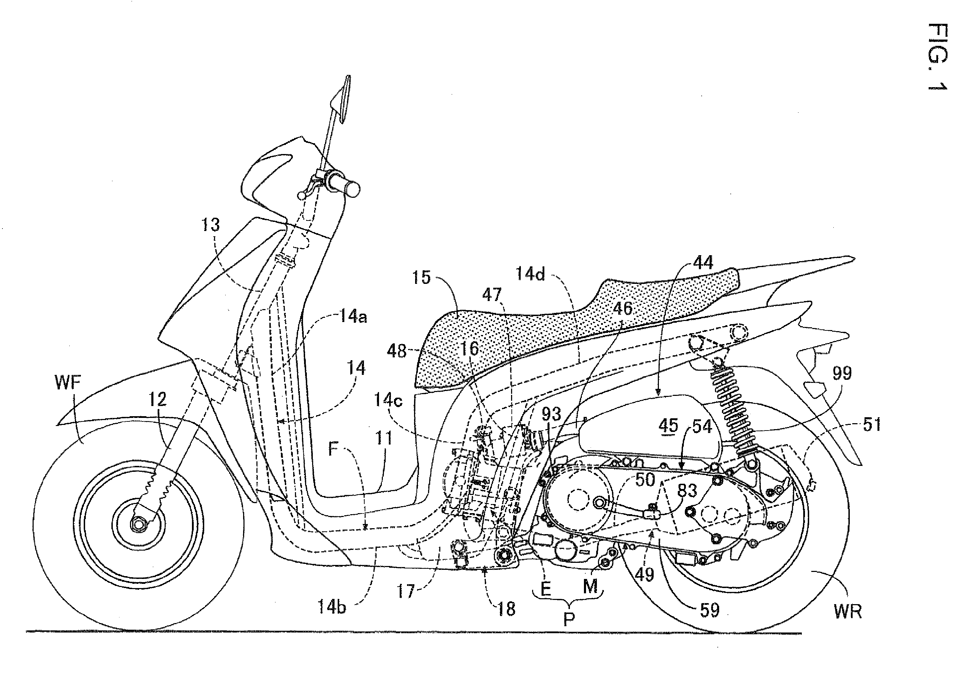

The first embodiment of the present invention will be described referring to Fig. 1-Fig. 6. First, in Fig. 1, the small vehicle is a scooter type motorcycle having a floor 11 of a low-floor type, and a body frame F thereof includes a head pipe 13 steerably supporting front forks 12 journaling a front wheel WF, and a pair of right and left side frames 14... whose front ends are joined to the head pipe 13. The side frame 14 integrally includes a down frame part 14a hung down from the head pipe 13, a lower frame part 14b continuing to the lower end of the down frame part 14a and extending rearward below the floor 11 with the rear half part thereof being formed so as to incline to rise rearward, a rising frame part 14c continuing to the rear end of the lower frame part 14b and rising upward in the rear of the floor 11, and a seat rail part 14d extending rearward from the rear end of the rising frame part 14c so as to support a riding seat 15, and is formed by bending one pipe.

Between the rear parts of the lower frame parts 14b... and the front parts of the seat rail parts 14d... in the side frames 14..., rear sub frames 16... are arranged so as to be positioned below the lower frame parts 14b... and in the rear of the rising frame parts 14c... in the side frames 14..., and pivot plates 17... are arranged between both of the side frames 14... and both of the rear sub frames 16....

A power unit P formed of an engine E disposed on the front side of the rear wheel WR and a transmission device M disposed on the left side of the rear wheel WR is journaled to the pivot plates 17... through a link mechanism 18 in a vertically swingable manner, and the rear wheel WR is journaled to the rear part of the power unit P.

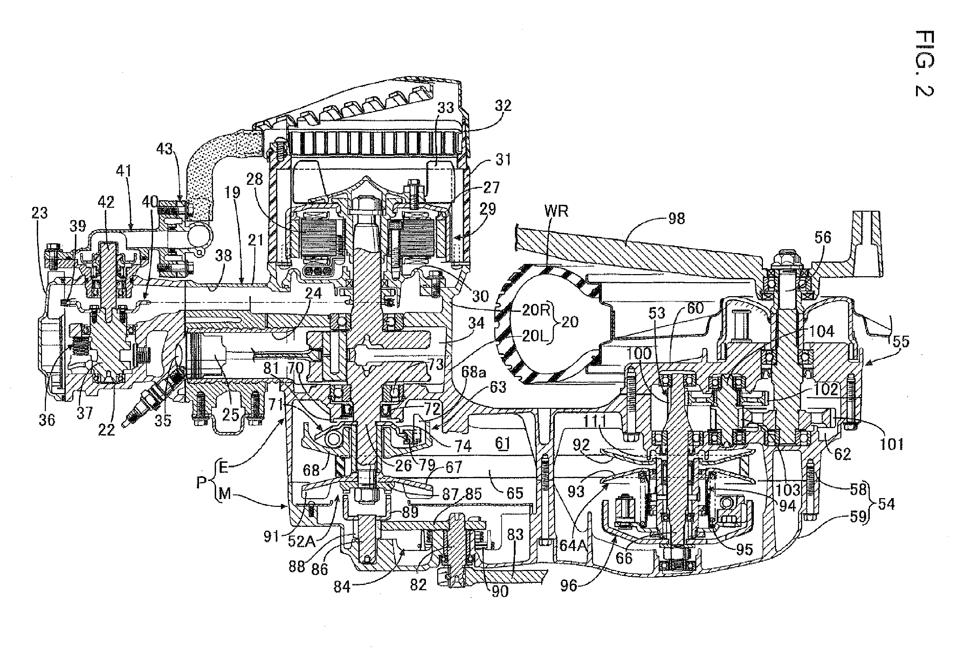

In Fig. 2, an engine body 19 of the engine E that is a single-cylinder water-cooled four-cycle engine includes a crankcase 20 formed by joining left and right crankcase half bodies 20L, 20R split into two parts of the right and left with a crank chamber 34 being formed inside, a cylinder block 21 joined to the crankcase 20, a cylinder head 22 joined to the cylinder block 21, and a head cover 23 joined to the cylinder head 22, and a piston 25 is slidably fitted to a cylinder bore 24 arranged in the cylinder block 21 with a cylinder axial line slightly inclined to rise forward. A crankshaft 26 extending in a width direction of a body frame F is rotatably supported to the crankcase 20, and the piston 25 is connected to the crankshaft 26.

To the right end of the crankshaft 26 rotatably penetrating the right crankcase half body 20R in the crankcase 20, an outer rotor 27 is fixed, and an inner stator 28 surrounded by the outer rotor 27 so as to constitute a generator 29 with the outer rotor 27 is fixed to a support plate 30 fastened to the right crankcase half body 20R.

To the right crankcase half body 20R, a generator cover 31 of a cylindrical shape surrounding the generator 29 is joined, and a radiator 32 is disposed on the right side of the generator cover 31. To the crankshaft 26, a cooling fan 33 for circulating cooling air to the radiator 32 is fixed so as to be disposed between the generator 29 and the radiator 32.

In the meantime, a valve gear 36 driving opening/closing of an intake valve (not shown) controlling intake air directed to a combustion chamber 35 formed between the cylinder block 21 and the cylinder head 22 with a top portion of the piston 25 opposed thereto and an exhaust valve (not shown) controlling exhaust gas from the combustion chamber 35 is stored between the cylinder head 22 and the head cover 23, and a camshaft 37 included in the valve gear 36 is supported by the cylinder head 22 so as to be rotatable around an axial line parallel to the crankshaft 26.

Between the crankshaft 26 and the camshaft 37, a timing transmission device 40 including a cam chain 39 running through a cam chain chamber 38 formed in the engine body 19 from the crankcase 20 through to the cylinder head 22 is arranged, and power from the crankshaft 26 is transmitted to the camshaft 37 by the timing transmission device 40 in a speed reduction ratio of 1/2. Also, to the camshaft 37, a pump shaft 42 of a cooling water pump 41 attached to the right side surface of the cylinder head 22 is coaxially connected in a relatively non-rotatable manner, and the cooling water pump 41 is connected to the radiator 32 through a thermostat 43.

Pay attention to Fig. 1, an intake device 44 is connected to the upper side surface of the cylinder head 22 in the engine body 19, the intake deice 44 includes an air cleaner 45, an inlet pipe 46 whose upstream end is connected to the air cleaner 45, and a throttle body 47 arranged between the downstream end of the inlet pipe 46 and the cylinder head 22, and a fuel injection valve 48 injecting fuel into the air weighed by the throttle body 47 is attached to the cylinder head 22. Also, an exhaust device 49 connected to the lower side surface of the cylinder head 22 includes an exhaust pipe 50 connected to the lower part of the cylinder head 22 and extended to the right side part of the rear wheel WR from the lower right part of the engine body 19 and an exhaust muffler 51 connected to the exhaust pipe 50 and disposed on the right side of the rear wheel WR.

The transmission device M includes a belt type continuously variable transmission 52A stored inside a transmission case 54 connected to the crankcase 20 and extending toward the left side part of the rear wheel WR and a gear mechanism 53 reducing the speed of output of the continuously variable transmission 52A and transmitting it to an axle 56 of the rear wheel WR, and the gear mechanism 53 is stored inside a gear case 55 attached to the rear part of the transmission case 54.

The transmission case 54 is formed of a case body 58 integrally continuing to the left crankcase half body 20L of the crankcase 20 and extending rearward to the left side part of the rear wheel WR and a first cover 59 covering the case body 58 from the outside, and the air cleaner 45 of the intake device 44 is supported by the case body 58 disposed below the air cleaner 45. The gear case 55 is formed of the rear part of the case body 58 and a second cover 60 connected to the rear part of the case body 58 from the inside. A transmission chamber 61 storing the belt type continuously variable transmission 52A is formed inside the transmission case 54 so as to be separate from the crank chamber 34 inside the crankcase 20, and a gear chamber 62 storing the gear mechanism 53 is formed inside the gear case 55 so as to be separate from the transmission chamber 61 and the crank chamber 34.

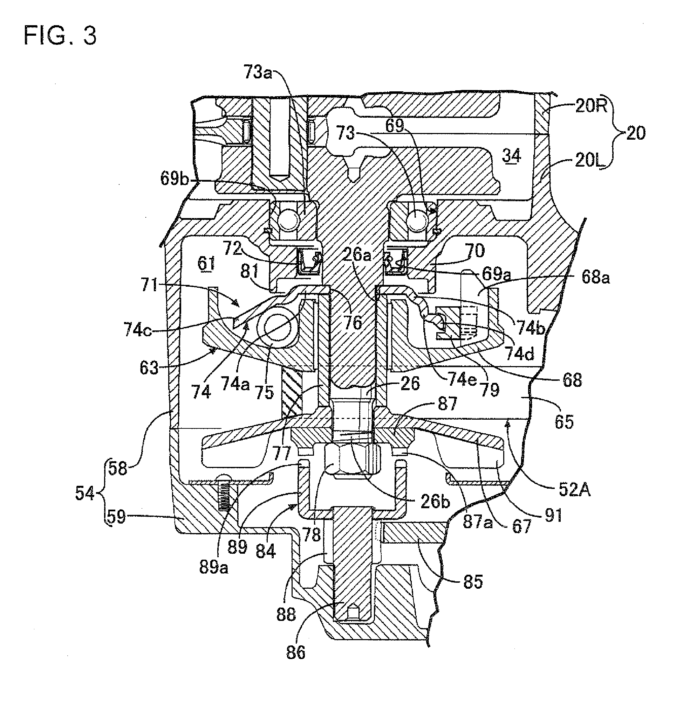

Reference is made also to Fig. 3. A first shaft support part 70 of a cylindrical shape forming a bearing hole 69 connecting the crank chamber 34 and the transmission chamber 61 is arranged in the left crankcase half body 20L of the crankcase 20, and the belt type continuously variable transmission 52A is stored in the transmission chamber 61 so as to be disposed between the crankshaft 26 rotatably penetrating the bearing hole 69 and a transmission shaft 66 interlocked and connected to the axle 56 of the rear wheel WR.

Between the inner periphery of the bearing hole 69 and the outer periphery of the crankshaft 26, an oil seal 72 that is a seal member of an endless shape and a ball bearing 73 that is a bearing member are interposed in this order from the transmission chamber 61 toward the crank chamber 34 side. The bearing hole 69 is shaped by continuation of a small diameter hole part 69a on the transmission chamber 61 side and a large diameter hole part 69b with a larger diameter than that of the small diameter hole part 69a and disposed on the crank chamber 34 side in a coaxial manner, the oil seal 72 is interposed between the inner periphery of the small diameter hole part 69a and the outer periphery of the crankshaft 26, and the ball bearing 73 is interposed between the inner periphery of the large diameter hole part 69b and the outer periphery of the crankshaft 26. Also, the inside diameter of the small diameter hole part 69a is formed to a comparatively large diameter so that an inner ring 73a of the ball bearing 73 can be pushed from the small diameter hole part 69a side in detachment work for replacement of the ball bearing 73 in maintenance.

The belt type continuously variable transmission 52A includes a driving pulley 63 arranged on the crankshaft 26 so as to be capable of changing the belt winding diameter, a driven pulley 64A arranged on the transmission shaft 66, and a V belt 65 of an endless shape wound around the driving pulley 63 and the driven pulley 64A, and a drive mechanism 71 changing the belt winding diameter of the driving pulley 63 is arranged on the crankshaft 26 within the transmission chamber 61.

The driving pulley 63 is formed of a fixed pulley half body 67 fixed to the crankshaft 26 and a movable pulley half body 68 disposed on the crankcase 20 side of the fixed pulley half body 67 so as to be capable of approaching and departing from the fixed pulley half body 67.

Also, the drive mechanism 71 includes a ramp plate 74 as a first rotation member disposed between the movable pulley half body 68 and the first shaft support part 70 and fixed to the crankshaft 26 and a plurality of weight rollers 75... disposed between the ramp plate 74 and the movable pulley half body 68.

Inside the transmission chamber 61, a step part 26a of an annular shape facing the opposite side of the crankcase 20 is formed in the crankshaft 26. On the other hand, in the center part of the ramp plate 74, a through-hole 76 through which the crankshaft 26 penetrates is arranged, and the ramp plate 74 abuts on the step part 26a in the peripheral part of the through-hole 76. Also, a collar 77 of a cylindrical shape penetrating the center part of the movable pulley half body 68 is fitted to the crankshaft 26, the ramp plate 74 is sandwiched between the inner end of the collar 77 and the step part 26a, and the outer end of the collar 77 abuts on the inner side surface of the fixed pulley half body 67 so as to surround the crankshaft 26. Further, an engaged body 87 constituting a part of a kick-type starting device 84 which will be described below abuts on the outer side surface of the fixed pulley half body 67 so as to sandwich the fixed pulley half body 67 between the outer end of the collar 77 and the engaged body, and the fixed pulley half body 67 is fixed to the crankshaft 26 by screwing a nut 78 to a screw shaft part 26b coaxially arranged in the outer end of the crankshaft 26 so as to protrude from the engaged body 87 and tightening the nut 78 to be abutted on and engaged with the engaged body 87.

The movable pulley half body 68 is capable of approaching and departing from the fixed pulley half body 67 so as to be guided by the collar 77, and the belt winding radius of the V belt 65 around the driving pulley 63 increases by approaching of the movable pulley half body 68 to the fixed pulley half body 67.

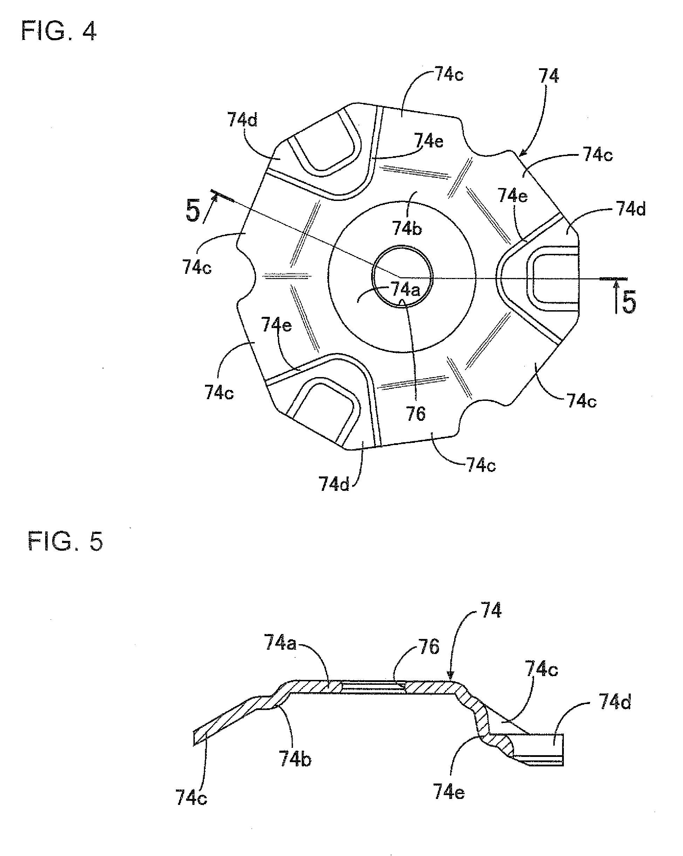

In Fig. 4 and Fig. 5, the ramp plate 74 integrally includes a disc part 74a which is formed into a disk shape with the through hole 76 allowing the crankshaft 26 to penetrate therethrough in the center and on which the inner end of the collar 77 abuts, an annular part 74b continuing to the entire periphery of the outer periphery of the disc part 74a and extending in a cylindrical shape to the side opposite of the crankcase 20, multiple sets (3 sets in the present embodiment) of slope parts 74c, 74c... extending radially so as to be neighboring to each other to form pairs at multiple positions (3 positions in the present embodiment) at equal intervals in the peripheral direction of the annular part 74b, flat parts 74d... disposed between the slope parts 74c, 74c... of respective sets and lining a plane orthogonal to the axial line of the crankshaft 26, and connecting wall parts 74e... in a generally V-shape in the cross section extending in the direction of the axial line of the crankshaft 26 and connecting the slope parts 74c, 74c... of respective sets and the flat parts 74d....

The slope parts 74c... allow the weight rollers 75... to rolling-contact thereto and are incliningly formed so as to approach the movable pulley half body 68 as they go outward in the radial direction of the crankshaft 26, with a part of the slope parts 74c... protruding to the first shaft support part 70 side as shown in Fig. 5.

Also, slide pieces 79... are attached to multiple positions in the peripheral direction of the outer periphery of the ramp plate 74, that is to the outer peripheral parts of the flat parts 74d... in the present embodiment, guide plate parts 68a... extending in the direction of the axial line of the crankshaft 26 so as to guide the slide pieces 79... to the direction of the axial line are arranged in multiple positions (3 positions in the present embodiment) in the peripheral direction of the outer periphery of the movable pulley half body 68, and the movable pulley half body 68 rotates along with the ramp plate 74.

According to the drive mechanism 71, the movable pulley half body 68 is pressingly driven to the side approaching the fixed pulley half body 67 by a centrifugal force applied to the weight rollers 75... according to increase of the rotational speed of the ramp plate 74 rotating along with the crankshaft 26, and the belt winding radius of the driving pulley 63 increases.

A kick shaft 82 is rotatably supported to the first cover 59 in the transmission case 54, and a kick pedal 83 is arranged at the outer end of the kick shaft 82. Also, on the inner surface side of first cover 59 and between the kick shaft 82 and the crankshaft 26, the kick type starting device 84 is arranged which is capable of transmitting rotational power of the kick shaft 82 according to the stepping operation of the kick pedal 83 to the crankshaft 26.

The kick type starting device 84 includes a sector gear 85 fixed to the inner end of the kick shaft 82, a ratchet shaft 86 supported by the first cover 59 so as to be capable of moving in the axial direction and rotating around the axial line and arranged coaxially with the crankshaft 26, the engaged body 87 having a ratchet teeth 87a facing the opposite side of the fixed pulley half body 67 and fixed to the fixed pulley half body 67, a driven helical gear 88 formed integrally with the ratchet shaft 86 so as to mesh with the sector gear 85, a ratchet wheel 89 having ratchet teeth 89a capable of meshing with the ratchet teeth 87a, opposing the engaged body 87, and fixed to the ratchet shaft 86, and a return spring 90 arranged between the first cover 59 of the transmission case 54 and the sector gear 85.

In the kick type starting device 84, when the sector gear 85 is operated to rotate resisting the spring force of the return spring 90 by stepping operation of the kick pedal 83, the ratchet shaft 86 moves to the fixed pulley half body 67 side while rotating, the ratchet teeth 89a of the ratchet wheel 89 mesh with the ratchet teeth 87a of the engaged body 87, and rotational power for starting comes to be transmitted to the crankshaft 26 through the engaged body 87 and the fixed pulley half body 67.

Also, on the outer surface of the fixed pulley half body 67 in the driving pulley 63, multiple fins 91... allowing the fixed pulley half body 67 to achieve the function as a cooling fan of circulating cooling air into the transmission case 54 are protrudingly arranged.

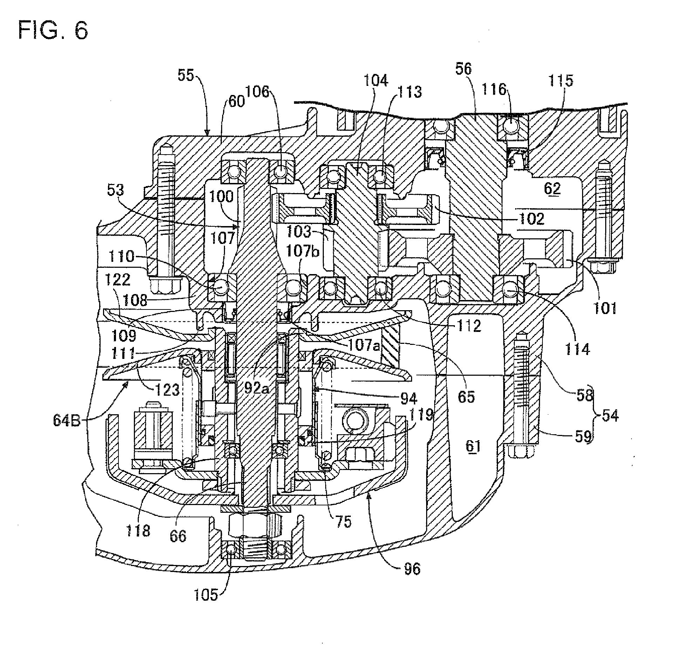

With reference also to Fig. 6, the driven pulley 64A is formed of a fixed pulley half body 92 as a first rotation member fixed to an inner cylinder 118 of a cylindrical shape supported by the transmission shaft 66 in a relatively rotatable manner while axially surrounding the transmission shaft 66 and a movable pulley half body 93 capable of approaching and departing from the fixed pulley half body 92 by being fixed to an outer cylinder 119 coaxially surrounding the inner cylinder 118 so as to be capable of relatively moving in the axial direction and relatively rotating with respect to the inner cylinder 118, and the V belt 65 is wound around between the fixed pulley half body 92 and the movable pulley half body 93. Also, a torque cam mechanism 94 applying an axial component force between both of the pulley half bodies 92, 93 according to relative rotational phase difference between the movable pulley half body 93 and the fixed pulley half body 92 is arranged between the inner cylinder 118 and the outer cylinder 119, the movable pulley half body 93 is elastically urged toward the fixed pulley half body 92 side by a coil spring 95, and a centrifugal clutch 96 that becomes a power transmitting state when the engine speed exceeds a set rotational speed is arranged between the fixed pulley half body 92 and the transmission shaft 66.

The axial interval between the fixed pulley half body 92 and the movable pulley half body 93 in the driven pulley 64A is decided by balance of an axial force generated by the torque cam mechanism 94, an axial elastic force generated by the coil spring 95, and a force from the V belt 65 applied to the direction increasing the interval between the fixed pulley half body 92 and the movable pulley half body 93, and the winding radius of the V belt 65 around the driven pulley 64A reduces when the winding radius of the V belt 65 around the the driving pulley 63 increases by making the movable pulley half body 68 approach the fixed pulley half body 67 in the driving pulley 63.

One end of the axle 56 of the rear wheel WR hermetically penetrates the second cover 60 to be plunged into the gear case 55, the one end of the axle 56 is rotatably supported by the case body 58 and the second cover 60, and the gear mechanism 53 arranged between the transmission shaft 66 and the axle 56 is stored in the gear chamber 62.

Also, a swing arm 98 (refer to Fig. 2) connected to the crankcase 20 of the engine body 19 is disposed on the right side of the rear wheel WR, and the other end of the axle 56 is rotatably supported to the rear part of the swing arm 98. Further, as shown in Fig. 1, a rear cushion unit 99 is arranged between the rear part of the case body 58 in the transmission case 54 and the rear part of the left seat rail part 14d in a vehicle frame F.

The gear mechanism 53 includes a drive gear 100 arranged integrally with the transmission shaft 66 to which rotational power from the crankshaft 26 is transmitted, a final gear 101 arranged on the axle 56 of the rear wheel WR, and first and second counter gears 102, 103 disposed between the final gear 101 and the drive gear 100, and is stored in the gear chamber 62.

Both ends of a counter shaft 104 are rotatably supported to the case body 58 and the second cover 60 cooperatively forming the gear case 55, the first counter gear 102 with a larger diameter than that of the drive gear 100 is fixed to the counter shaft 104 so as to mesh with the drive gear 100, and the second counter gear 103 with a smaller diameter than those of the first counter gear 102 and the final gear 101 is arranged integrally with the counter shaft 104 so as to mesh with the final gear 101.

One end of the transmission shaft 66 is rotatably supported to the first cover 59 in the transmission case 54 through a ball bearing 105, and the other end of the transmission shaft 66 is rotatably supported to the second cover 60 in the gear case 55 through a ball bearing 106. Also, in the case body 58, a second shaft support part 108 forming a bearing hole 107 connecting the transmission chamber 61 and the gear chamber 62 is arranged, and the transmission shaft 66 rotatably penetrates the bearing hole 107.

Between the inner periphery of the bearing hole 107 in the second shaft support part 108 and the outer periphery of the transmission shaft 66, an oil seal 109 that is a seal member of an endless shape and a ball bearing 110 that is a bearing member are interposed in this order from the transmission chamber 61 toward the gear chamber 62 side. The bearing hole 107 is shaped by continuation of a small diameter hole part 107a on the transmission chamber 61 side and a large diameter hole part 107b with a larger diameter than that of the small diameter hole part 107a and disposed on the gear chamber 62 side in a coaxial manner, the oil seal 109 is interposed between the inner periphery of the small diameter hole part 107a and the outer periphery of the transmission shaft 66, and the ball bearing 110 is interposed between the inner periphery of the large diameter hole part 107b and the outer periphery of the transmission shaft 66.

Both ends of the counter shaft 104 is rotatably supported to the case body 58 and the second cover 60 of the gear case 55 through ball bearings 112, 113. Also, one end of the axle 56 is rotatably supported to the case body 58 through a ball bearing 114, and an oil seal 115 and a ball bearing 116 are interposed in this order from the gear chamber 62 side between a middle part of the axle 56 rotatably penetrating the second cover 60 and the second cover 60.

In the meantime, the small diameter hole part 69a of the bearing hole 69 in the first shaft support part 70 arranged in the left crankcase half body 20L of the crankcase 20 is formed to a comparatively large diameter as described above and the oil seal 72 interposed between the first shaft support part 70 and the crankshaft 26 and facing the transmission chamber 61 is also formed to a comparatively large diameter, and therefore it is disadvantageous with respect to adhesion of the dust floating inside the transmission chamber 61 of the transmission case 54. Further, also the oil seal 109 interposed between the second shaft support part 108 arranged in the case body 58 in the transmission case 54 and the transmission shaft 66 is disposed so as to face the transmission chamber 61, and it is desirable to suppress adhesion of the dust to the oil seal 108.

According to the present invention, the surrounding wall extending toward at least one rotation member opposing the at least one shaft support part out of the first rotation member opposing the end on the transmission chamber 61 side of the first shaft support part 70 and the second rotation member opposing the end on the transmission chamber 61 side of the second shaft support part 108 is arranged in at least one of the first and second shaft support parts 70, 108 so as to surround at least a part of at least one of the crankshaft 26 and the transmission shaft 66. In this first embodiment, a surrounding wall 81 extending toward the ramp plate 74 that is a first rotation member is arranged in the first shaft support part 70 while surrounding the entire periphery of the crankshaft 26 and a surrounding wall 111 extending toward the fixed pulley half body 92 that is a second rotation member is arranged in the second shaft support part 108 while surrounding the entire periphery of the transmission shaft 66, the distal end of one surrounding wall 81 is disposed proximately to the ramp plate 74, and the distal end of the other surrounding wall 111 is disposed proximately to the fixed pulley half body 92.

One surrounding wall 81 is formed integrally with the left crankcase half body 20L of the crankcase 20 and is formed into an endless shape continuously over the entire periphery of the first shaft support part 70 with the outer peripheral surface thereof continuing in flush with the outer peripheral surface of the first shaft support part 70.

Also, the ramp plate 74 includes the disc part 74a and the annular part 74b disposed inside the slope parts 74c, 74c... in the radial direction of the crankshaft 26, and a part of the annular part 74b and the disc part 74a out of the disc part 74a and the annular part 74b are disposed inside the surrounding wall 81.

Further, the guide plate parts 68a... arranged in multiple positions in the peripheral direction of the outer periphery of the movable pulley half body 67 in the driving pulley 63 so as to guide the slide pieces 79... attached to the ramp plate 74 are formed so that some thereof overlap the surrounding wall 81 in the radial direction of the crankshaft 26 at least when the crankshaft 26 and the ramp plate 74 are in a state of low rotational speed.

Furthermore, the surrounding wall 111 arranged in the second shaft support part 108 is formed integrally with the second shaft support part 108 of the case body 58 into an annual shape, and it is preferable that the surrounding wall 111 is formed so that the distal end of the surrounding wall 111 overlaps a boss part 92a of a cylindrical shape in the radial direction, the boss part 92a being included in the fixed pulley half body 92 in the driven pulley 64A in the inner periphery of the fixed pulley half body 92.

Next, actions of the first embodiment will be described. The first shaft support part 70 through which the crankshaft 26 rotatably penetrates is arranged in the left crankcase half body 20L of the crankcase 20, the second shaft support part 108 through which the transmission shaft 66 interlocked and connected to the axle 56 of the rear wheel WR rotatably penetrates is arranged in the case body 58 of the transmission case 54, the belt type continuously variable transmission 52A arranged between the crankshaft 26 and the transmission shaft 66 is stored in the transmission chamber 61 of the transmission case 54, the oil seal 72 and the ball bearing 73 are interposed in this order from the transmission chamber 61 side between the first shaft support part 70 and the crankshaft 26, and the oil seal 109 and the ball bearing 110 are interposed in this order from the transmission chamber 61 side between the second shaft support part 108 and the transmission shaft 66.

In the meantime, inside the transmission chamber 61 of the transmission case 54, the dust such as the abrasion powder of the V belt 65 in the belt type continuously variable transmission 52A and the dust contained in the external air introduced into the transmission case 54 by the fins 91... protrudingly arranged on the outer surface of the fixed pulley half body 67 in the driving pulley 63 floats, and the dust causes shortening of the lifetime of the oil seals 72, 110 when the dust adheres to the oil seals 72, 110. Hence, the surrounding wall extending toward at least one rotation member opposing at least one shaft support part out of the ramp plate 74 that is the first rotation member opposing the end on the transmission chamber 61 side of the first shaft support part 70 and the fixed pulley half body 92 that is the second rotation member opposing the end on the transmission chamber 61 side of the second shaft support part 108 is arranged in at least one of the first and second shaft support parts 70, 108 so as to surround at least a part of at least one of the crankshaft 26 and the transmission shaft 66. According to this first embodiment, the surrounding wall 81 extending toward the ramp plate 74 is arranged in the first shaft support part 70 while surrounding the entire periphery of the crankshaft 26 and the surrounding wall 111 extending toward the fixed pulley half body 92 is arranged in the second shaft support part 108 while surrounding the entire periphery of the transmission shaft 66, the distal end of one surrounding wall 81 is disposed proximately to the ramp plate 74, and the distal end of the other surrounding wall 111 is disposed proximately to the fixed pulley half body 92.

Accordingly, the dust inside the transmission chamber 61 can be suppressed as much as possible from adhering to the oil seal 72 by covering the end on the transmission chamber 61 side of the oil seal 72 with the ramp plate 74 and the surrounding wall 81, which can contribute to improvement of the lifetime of the oil seal 72, and the dust inside the transmission chamber 61 can be suppressed as much as possible from adhering to the oil seal 109 by covering the end on the transmission chamber 61 side of the oil seal 109 with the fixed pulley half body 92 and the surrounding wall 111, which can contribute to improvement of the lifetime of the oil seal 109.

Also, because the surrounding wall 81 is formed integrally with the left crankcase half body 20L of the crankcase 20 and the surrounding wall 111 is formed integrally with the case body 58, increase of the number of components can be suppressed, productivity can be improved, and the cost can be reduced.

Also, because the surrounding wall 81 is formed into an endless shape continuously over the entire periphery of the first shaft support part 70 with the outer peripheral surface thereof continuing in flush with the outer peripheral surface of the first shaft support part 70 of a cylindrical shape, the surrounding wall 81 covers the end on the transmission chamber 61 side of the oil seal 72 more effectively, and the dust directed to the oil seal 72 can be suppressed more effectively.

Further, because the annular part 74b a part of which is disposed inside the surrounding wall 81 is arranged in the ramp plate 74, a labyrinth structure comes to be formed between the outer periphery and the inner periphery of the surrounding wall 81, intrusion of the dust to the oil seal 72 side can be suppressed further more effectively.

Furthermore, when the distal end of the surrounding wall 111 is configured to overlap a boss part 92a of a cylindrical shape included in the fixed pulley half body 92 of the driven pulley 64A on the inner surface thereof in the radial direction, a labyrinth structure comes to be formed between the outer periphery and the inner periphery of the surrounding wall 111, and intrusion of the dust to the oil seal 109 side can be suppressed further more effectively.

Also, the driving pulley 63 includes the fixed pulley half body 67 fixed to the crankshaft 26 and the movable pulley half body 68 supported to the crankshaft 26 so as to approach and depart from the fixed pulley half body 67, the drive mechanism 71 includes the ramp plate 74 disposed between the movable pulley half body 68 and the first shaft support part 70 and fixed to the crankshaft 26 and the multiple weight rollers 75... disposed between the ramp plate 74 and the movable pulley half body 68, the multiple slope parts 74c... allowing the weight rollers 75... to rolling contact thereto are formed in the ramp plate 74 so that some thereof protrude to the first shaft support part 70 side, the annular part 74b is arranged in the ramp plate 74 so as to be disposed inside the slope parts 74c... in the radial direction of the crankshaft 26, and therefore the effect of preventing intrusion of the dust into the surrounding wall 81 can be enhanced due to a ventilation effect of an air stream caused by that some of the multiple slope parts 74c... protrude to the first shaft support part 70 side during rotation of the ramp plate 74.

In addition, the slide pieces 79... are attached to multiple positions in the peripheral direction of the outer periphery of the ramp plate 74, the guide plate parts 68a... extending in the direction of the axial line of the crankshaft 26 so as to guide the slide pieces 79... to the direction of the axial line are arranged in multiple positions in the peripheral direction of the outer periphery of the movable pulley half body 68 so that some thereof overlap the surrounding wall 81 in the radial direction of the crankshaft 26 at least at a low rotational speed, and therefore the effect of preventing intrusion of the dust into the surrounding wall 81 can be enhanced further more due to a centrifugal fan effect of the guide plate parts 68a....

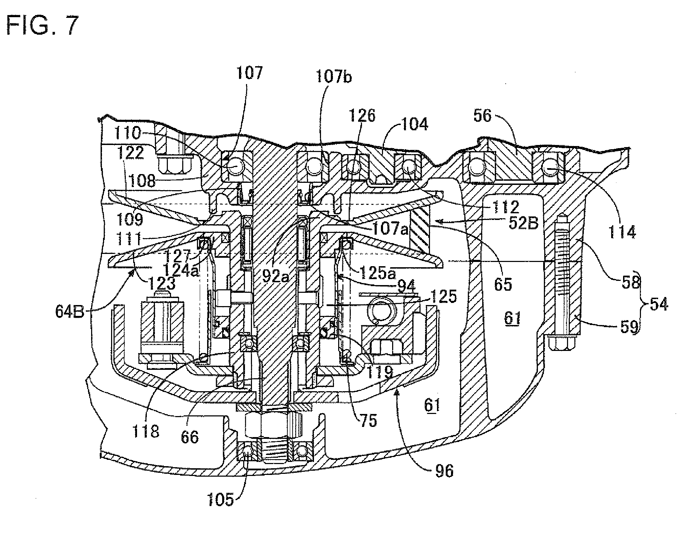

The second embodiment of the present invention will be described referring to Fig. 7, however the parts corresponding to the first embodiment will be illustrated only attaching same reference signs, and detailed description thereon will be omitted.

A driven pulley 64B forming a part of a belt type continuously variable transmission 52B arranged between the crankshaft 26 (refer to the first embodiment) and the transmission shaft 66 is formed of a fixed pulley half body 122 fixed to an inner cylinder 122 of a cylindrical shape supported by the transmission shaft 66 in a relatively rotatable manner while axially surrounding the transmission shaft 66 and a movable pulley half body 123 capable of approaching and departing from the fixed pulley half body 122 by being fixed to an outer cylinder 125 coaxially surrounding the inner cylinder 124 so as to be capable of relatively moving in the axial direction and relatively rotating with respect to the inner cylinder 124, and the V belt 65 is wound around between the fixed pulley half body 122 and the movable pulley half body 123. Also, the torque cam mechanism 94 applying an axial component force between both of the pulley half bodies 122, 123 according to relative rotational phase difference between the movable pulley half body 123 and the fixed pulley half body 122 is arranged between the inner cylinder 124 and the outer cylinder 125, the movable pulley half body 123 is elastically urged toward the fixed pulley half body 122 side by the coil spring 95, and the centrifugal clutch 96 that becomes a power transmitting state when the engine speed exceeds a set rotational speed is arranged between the fixed pulley half body 122 and the transmission shaft 66.

The fixed pulley half body 122 and the movable pulley half body 123 are used by reversing a pulley half body of the same shape by 180 degrees, and the inner peripheral part of the fixed pulley half body 122 is fixed to the outer peripheral part of a flange part 124a arranged integrally with the end on the second shaft support part 108 side of the inner cylinder 124 and extending outward in the radial direction by ring mash welding. Also, the inner peripheral part of the movable pulley half body 123 is fixed to the outer peripheral part of a flange part 125a arranged integrally with the end on the second shaft support part 108 side of the outer cylinder 125 and extending outward in the radial direction by ring mash welding.

Further, in a part facing the second shaft support part 108 side of the fixing part of the fixed pulley half body 122 to the flange part 124a of the inner cylinder 124, an annular recess 126 is formed by machining for removing a projection generated in ring mash welding. Also, in a part facing the opposite side of the fixed pulley half body 122 of the fixing part of the movable pulley half body 123 to the flange part 125a of the outer cylinder 125, an annular recess 127 is formed by machining for removing the projection generated in ring mash welding, and a part of an annular retainer 128 receiving one end of the coil spring 95 is fitted to the annular recess 127.

In the second shaft support part 108 arranged in the case body 58 in the transmission case 54, the surrounding wall 111 extending toward the flange part 124a of the inner cylinder 124 that is the second rotation member is integrally formed so as to surround the entire periphery of the transmission shaft 66, and the distal end of the surrounding wall 111 is disposed proximately to the inner peripheral side of the annular recess 126.

According to the second embodiment, the surrounding wall 111 extending toward the flange part 124a of the inner cylinder 124 so as to surround the entire periphery of the transmission shaft 66 is arranged in the second shaft support part 108 and the distal end of the surrounding wall 111 is disposed proximately to the flange part 124a, and therefore the dust inside the transmission chamber 61 can be suppressed as much as possible from attaching to the oil seal 109 by covering the end on the transmission chamber 61 side of the oil seal 109 interposed between the second shaft support part 108 and the transmission shaft 66 with one end of the inner cylinder part 124 having the flange part 124a and the surrounding wall 111, which can contribute to improvement of the lifetime of the oil seal 109.

In addition, the annular recess 126 produced by machining is formed in a part facing the second shaft support part 108 side of the fixing part of the fixed pulley half body 122 to the flange part 124a of the inner cylinder 124 and the distal end of the surrounding wall 111 is disposed proximately to the inner peripheral side of the annular recess 126, therefore variation in dimension of the gap between the distal end of the surrounding wall 111 and the inner peripheral side of the annular recess 126 can be suppressed, circulation resistance is increased by changing the width of the gap generated between the surrounding wall 111 and one end of the inner cylinder 124 and the fixed pulley half body 122 to be large or small, and thereby the dust can be suppressed from intruding to the oil seal 109 side more effectively.

Further, because the fixed pulley half body 122 and the movable pulley half body 123 of the driven pulley 64B are used by reversing a pulley half body of the same shape by 180 degrees, the kind of components can be reduced. Also, because the inner peripheral part of the fixed pulley half body 122 is fixed to the outer peripheral part of the flange part 124a of the inner cylinder 124 by ring mash welding and the inner peripheral part of the movable pulley half body 123 is fixed to the outer peripheral part of the flange part 125a of the outer cylinder 125 by ring mash welding, productivity can be improved.

The embodiments of the present invention have been described above, however the present invention is not limited to the embodiments described above, and a variety of alterations in design can be effected without departing from the present invention described in claims.

For example, in the embodiment above, the case using the drive mechanism 71 has been described in which the movable pulley half body 68 of the driving pulley 63 was driven in the axial direction according to the rotational speed of the crankshaft 26, however the present invention can be applied also to a case a drive mechanism is used which converts the rotational power of the electric motor to the axial driving force of the movable pulley half body 68. Further, the present invention can be applied also to a case a drive mechanism is arranged so as to sandwich the driving pulley 63 between the crankcase 20 and the drive mechanism, in which a surrounding wall extending from a shaft support part arranged in the crankcase 20 so as to rotatably support the crankshaft 20 is arranged proximately to a fixed pulley half body of a driving pulley. In addition, the present invention can be applied not only to the power unit for a motorcycle shown in the embodiments but also to a power unit for a three-wheeled vehicle.

### [Reference Signs List]

19...Engine body
20...Crankcase
26...Crankshaft
52A, 52B Belt type continuously variable transmission
54...Transmission case
56...Axle
61...Transmission chamber
63...Driving pulley
66...Transmission shaft
67...Fixed pulley half body
68...Movable pulley half body
68a...Guide plate part
70...First shaft support part
71...Drive mechanism
72, 109...Oil seal that is seal member
73, 110...Ball bearing that is bearing member
74...Ramp plate that is first rotation member
74b...Annular part
74c...Slope part
75...Weight roller
79...Slide piece
81, 111...Surrounding wall
92...Fixed pulley half body that is second rotation member
108...Second shaft support part
124...Inner cylinder that is second rotation member
P...Power unit
WR...Rear wheel

## Claims

1. A power unit for a small vehicle, in which a transmission chamber (61) is formed inside a transmission case (54) connected to a crankcase (20) of an engine body (19) and extended to a side part of a rear wheel (WR),
a belt type continuously variable transmission (52A, 52B) arranged between a crankshaft (26) rotatably supported by the crankcase (20) and a transmission shaft (66) interlocked and connected to an axle (56) of the rear wheel (WR), and rotatably supported by the transmission case (54) is stored in the transmission chamber (61),
a first shaft support part (70) through which the crankshaft (26) rotatably penetrates is arranged in the crankcase (20),
a second shaft support part (108) through which the transmission shaft (66) rotatably penetrates is arranged in the transmission case (54), and
seal members (72, 109) of an endless shape and bearing members (73, 110) are interposed in this order from the transmission chamber (61) side between the first shaft support part (70) and the crankshaft (26), and between the second shaft support part (108) and the transmission shaft (66),
wherein a first rotation member (74) opposing an end on the transmission chamber (61) side of the first shaft support part (70) and a second rotation member (92, 124) opposing an end on the transmission chamber (61) side of the second shaft support part (108) are stored in the transmission chamber (61),
a surrounding wall (81) extending from the first shaft support part (70) toward the first rotation member (74) is arranged so as to surround at least a part of the crankshaft (26) and
a distal end of the surrounding wall (81) is disposed proximately to the first rotation member (74),
wherein an annular part (74b) a part of which is disposed inside the surrounding wall (81) is arranged in the first rotation member (74),
wherein a driving pulley (63) that constitutes a part of the belt type continuously variable transmission (52A, 52B) includes a fixed pulley half body (67) fixed to the crankshaft (26) and a movable pulley half body (68) supported by the crankshaft (26) so as to approach and depart from the fixed pulley half body (67),
a drive mechanism (71) that drives the movable pulley half body (68) in an axial direction so as to change a belt winding radius of the driving pulley (63) includes a ramp plate (74) that is fixed to the crankshaft (26) as the first rotation member opposing the first shaft support part (70) and a plurality of weight rollers (75) disposed between the ramp plate (74) and the movable pulley half body (68),
a plurality of slope parts (74c) that allow the weight rollers (75) to rolling contact therewith are formed in the ramp plate (74) so that a part thereof protrudes to the first shaft support part (70) side, and
the annular part (74b) is arranged in the ramp plate (74) so as to be disposed inside the slope part (74c) in the radial direction of the crankshaft (26), wherein slide pieces (79) are attached to a plurality of positions in a peripheral direction on the outer periphery of the ramp plate (74), **characterized in that** guide plate parts (68a) that extend in a direction of an axial line of the crankshaft (26) so as to guide the slide pieces (79) in the direction of the axial line are arranged in a plurality of positions in the peripheral direction on the outer periphery of the movable pulley half body (68) so that a part thereof overlaps with the surrounding wall (81) in the radial direction of the crankshaft (26) at least at a low rotational speed.

2. The power unit for a small vehicle according to claim 1, wherein the surrounding wall (81) extending from the first shaft support part (70) is formed integrally with the crankcase (20).

3. The power unit for a small vehicle according to claim 1 or claim 2, wherein the surrounding wall (81) extending from the first shaft support part (70) of a cylindrical shape is formed in an endless shape continuing over the entire periphery of the first shaft support part (70) with an outer peripheral surface thereof continuing in flush with an outer peripheral surface of the first shaft support part (70).

## Patentansprüche

1. Antriebseinheit für ein Kleinfahrzeug, in welchem eine Getriebekammer (61) innerhalb eines Getriebegehäuses (54) ausgebildet ist, welches mit einem Kurbelgehäuse (20) eines Motorkörpers (19) verbunden ist und sich zu einem Seitenteil eines Hinterrades (WR) erstreckt,
wobei ein stufenloses Riemengetriebe (52A, 52B), welches zwischen einer Kurbelwelle (26), welche drehbar durch das Kurbelgehäuse (20) getragen ist, und einer Getriebewelle (66) angeordnet ist, welche gekuppelt und verbunden ist mit einer Achse (56) des Hinterrades (WR) und drehbar durch das Getriebegehäuse (54) getragen ist, in der Getriebekammer (61) aufbewahrt ist,
wobei ein erstes Wellentragteil (70), durch welches die Kurbelwelle (26) drehbar hindurchdringt, in dem Kurbelgehäuse (20) angeordnet ist,
wobei ein zweites Wellentragteil (108), durch welches die Getriebewelle (66) drehbar hindurchdringt, in dem Getriebegehäuse (54) angeordnet ist, und
wobei Dichtungselemente (72, 109) von einer Endlosform und Lagerelemente (73, 110) in dieser Reihenfolge eingefügt sind von der Seite der Getriebekammer (61) zwischen dem ersten Wellentragteil (70) und der Kurbelwelle (26) und zwischen dem zweiten Wellentragteil (108) und der Getriebewelle (66),
wobei ein erstes Drehelement (74), welches einem Ende an der Seite der Getriebekammer (61) des ersten Wellentragteils (70) gegenüberliegt, und ein zweites Drehelement (92, 124), welches einem Ende an der Seite der Getriebekammer (61) des zweiten Wellentragteils (108) gegenüberliegt, in der Getriebekammer (61) aufbewahrt ist;
wobei eine umgebende Wand (81), welche sich von dem ersten Wellentragteil (70) in Richtung des ersten Drehelements (74) erstreckt, angeordnet ist, sodass sie mindestens einen Teil der Kurbelwelle (26) umgibt, und wobei
ein distales Ende der umgebenden Wand (81) benachbart an dem ersten Drehelement (74) angeordnet ist, wobei
ein Ringteil (74b), von welchem ein Teil innerhalb der umgebenden Wand (81) angeordnet ist, in dem ersten Drehelement (74) angeordnet ist, wobei
eine Antriebsriemenscheibe (63), welche einen Teil des stufenlosen Riemengetriebes (52A, 52B) bildet, einen festgemachten Riemenscheibenhalbkörper (67), welcher an der Kurbelwelle (26) festgemacht ist, und einen beweglichen Riemenscheibenhalbkörper (68) umfasst, welcher durch die Kurbelwelle (26) getragen ist, um sich dem festgemachten Riemenscheibenhalbkörper (67) zu nähern und davon zu entfernen,
ein Antriebsmechanismus (71), welcher den beweglichen Riemenscheibenhalbkörper (68) in einer axialen Richtung antreibt, um einen Riemenwindungsradius der Antriebsriemenscheibe (63) zu ändern, eine Rampenplatte (74), welche als das erste Drehelement, welches dem ersten Wellentragteil (70) gegenüberliegt, an der Kurbelwelle (26) festgemacht ist und eine Mehrzahl von Gewichtswalzen (75) umfasst, welche zwischen der Rampenplatte (74) und dem beweglichen Riemenscheibenhalbkörper (68) angeordnet sind,
eine Mehrzahl von Neigungsteilen (74c), welche den Gewichtsrollen (75) erlaubten, einen Rollkontakt damit einzugehen, ist in der Rampenplatte (74) so ausgebildet, dass ein Teil davon zu der ersten Seite des Wellentragteil (70) hervorspringt, und
das Ringteil (74b) in der Rampenplatte (74) angeordnet ist, um so innerhalb des Neigungsteils (74c) in der Radialrichtung der Kurbelwelle (26) angeordnet zu sein, wobei
Gleitstücke (79) an einer Mehrzahl von Positionen in einer Peripherrichtung an der äußeren Peripherie der Rampenplatte (74) angebracht sind,
**dadurch gekennzeichnet, dass**
Leitplattenteile (68a), welche sich in einer Richtung einer Axiallinie der Kurbelwelle (26) erstrecken, um die Gleitstücke (79) in der Richtung der Axiallinie zu führen, in einer Mehrzahl von Positionen in der Peripherrichtung an der äußeren Peripherie des beweglichen Riemenscheibenhalbkörpers (68) angeordnet sind, so dass ein Teil davon mit der umgebenden Wand (81) in der Radialrichtung der Kurbelwelle (26) zumindest bei einer niedriger Drehzahl überlappt.

2. Antriebseinheit für ein Kleinfahrzeug nach Anspruch 1, wobei die umgebende Wand (81), welche sich von dem ersten Wellentragteil (70) erstreckt, zusammenhängend mit dem Kurbelgehäuse (20) ausgebildet ist.

3. Antriebseinheit für ein Kleinfahrzeug nach Anspruch 1 oder Anspruch 2, wobei die umgebende Wand (81), welche sich von dem ersten Wellentragteil (70) von einer zylindrischen Form erstreckt, in einer Endlosform ausgebildet ist, welche sich über die gesamte Peripherie des ersten Wellentragteils (70) fortsetzt mit einer sich bündig mit einer äußeren Peripheriefläche des ersten Wellentragteils (70) fortsetzenden äußeren Peripheriefläche davon.

## Revendications

1. Groupe moteur pour un petit véhicule, dans lequel une chambre de transmission (61) est formée à l'intérieur d'un boîtier de transmission (54) raccordé à un carter de moteur (20) d'un corps de moteur (19) et étendu jusqu'à une partie latérale d'une roue arrière (WR),
une transmission à variation continue de type à courroie (52A, 52B) agencée entre un vilebrequin (26) supporté en rotation par le carter de moteur (20) et un arbre de transmission (66) verrouillé et raccordé à un essieu (56) de la roue arrière (WR) et supporté en rotation par le boîtier de transmission (54), est stocké dans la chambre de transmission (61),
une première partie de support d'arbre (70) à travers laquelle pénètre, en rotation, le vilebrequin (26), est agencée dans le carter de moteur (20),
une seconde partie de support d'arbre (108) à travers laquelle pénètre, en rotation, l'arbre de transmission (66), est agencée dans le boîtier de transmission (54), et
des éléments de joint d'étanchéité (72, 109) d'une forme sans fin et des éléments de palier (73, 110) sont intercalés dans cet ordre à partir du côté de la chambre de transmission (61) entre la première partie de support d'arbre (70) et le vilebrequin (26), et entre la seconde partie de support d'arbre (108) et l'arbre de transmission (66),
dans lequel un premier élément de rotation (74) opposé à une extrémité du côté de la chambre de transmission (61) de la première partie de support d'arbre (70) et un second élément de rotation (92, 124) opposé à une extrémité du côté de la chambre de transmission (61) de la seconde partie de support d'arbre (108) sont stockés dans la chambre de transmission (61),
une paroi périphérique (81) s'étendant à partir de la première partie de support d'arbre (70) vers le premier élément de rotation (74) est agencée afin d'entourer au moins une partie du vilebrequin (26), et
une extrémité distale de la paroi périphérique (81) est disposée à proximité du premier élément de rotation (74),
dans lequel une partie annulaire (74b), dont une partie est disposée à l'intérieur de la paroi périphérique (81), est agencée dans le premier élément de rotation (74),
dans lequel une poulie menante (63) qui constitue une partie de la transmission à variation continue de type à courroie (52A, 52B) comprend un demi-corps de poulie fixe (67) fixé sur le vilebrequin (26) et un demi-corps de poulie mobile (68) supporté par le vilebrequin (26) afin de se rapprocher et de s'éloigner du demi-corps de poulie fixe (67),
un mécanisme d'entraînement (71) qui entraîne le demi-corps de poulie mobile (68) dans une direction axiale afin de modifier un rayon d'enroulement de courroie de la poulie menante (63), comprend une plaque de rampe (74) qui est fixée sur le vilebrequin (26) en tant que premier élément de rotation opposé à la première partie de support d'arbre (70) et une pluralité de contrepoids (75) disposés entre la plaque de rampe (74) et le demi-corps de poulie mobile (68),
une pluralité de parties inclinées (74c) qui permettent aux contrepoids (75) d'être en contact roulant avec ces dernières, sont formées dans la plaque de rampe (74) de sorte qu'une partie de ces dernières fait saillie du côté de la première partie de support d'arbre (70), et
la partie annulaire (74b) est agencée dans la plaque de rampe (74) afin d'être disposée à l'intérieur de la partie inclinée (74c) dans la direction radiale du vilebrequin (26),
dans lequel des pièces coulissantes (79) sont agencées dans une pluralité de positions dans une direction périphérique sur la périphérie externe de la plaque de rampe (74),
**caractérisé en ce que** :
des parties de plaque de guidage (68a) qui s'étendent dans une direction d'une ligne axiale du vilebrequin (26) afin de guider des pièces coulissantes (79) dans la direction de la ligne axiale, sont agencées dans une pluralité de positions dans la direction périphérique sur la périphérie externe du demi-corps de poulie mobile (68) de sorte que sa partie recouvre la paroi périphérique (81) dans la direction radiale du vilebrequin (26) au moins à une faible vitesse de rotation.

2. Groupe moteur pour un petit véhicule selon la revendication 1, dans lequel la paroi périphérique (81) s'étendant à partir de la première partie de support d'arbre (70) est formée de manière solidaire avec le carter de moteur (20).

3. Groupe moteur pour un petit véhicule selon la revendication 1 ou la revendication 2, dans lequel la paroi périphérique (81) s'étendant à partir de la première partie de support d'arbre (70) d'une forme cylindrique est formée selon une forme sans fin, continuant sur toute la périphérie de la première partie de support d'arbre (70) avec sa surface périphérique externe qui continue de niveau avec une surface périphérique externe de la première partie de support d'arbre (70).
